# NEW EUROPEAN PATENT SPECIFICATION

(11) **EP 2 863 753 B2**
(45) Date of publication and mention of the opposition decision: **14.08.2019**
(45) Mention of the grant of the patent: 17.08.2016
(21) Application number: 13737447.6
(22) Date of filing: 21.06.2013
(51) Int. Cl.: A21D 2/02, A21D 2/18, A21D 2/26, A21D 8/04, A21D 10/00

(54) **LIQUID BREAD IMPROVER, METHOD FOR PROVIDING THEREOF AND METHOD FOR PROVIDING BAKERY FOODS**
FLÜSSIGES BROTVERBESSERUNGSMITTEL, VERFAHREN ZUR BEREITSTELLUNG DAVON UND VERFAHREN ZUR BEREITSTELLUNG VON BACKWAREN
AMÉLIORANT LIQUIDE POUR BOULANGERIE, SON PROCÉDÉ DE PRODUCTION ET PROCÉDÉ DE PRODUCTION DE PRODUITS DE BOULANGERIE

(30) Priority: 26.06.2012 NL 2009065
(43) Date of publication of application: 29.04.2015
(73) Proprietor: Sonneveld Group B.V., 3356 LJ Papendrecht (NL)
(72) Inventor: OOSTENDORP, Alexander, NL-3361 TC Sliedrecht (NL); WEEGELS, Peter Louis, NL-6965 CC Doorwerth (NL)
(74) Representative: van Kooij, Adriaan
(86) International application number: PCT/NL2013/050443
(87) International publication number: WO 2014/003546

(56) References cited:
- EP-A1- 1 472 930
- WO-A1-96/13980
- WO-A1-2008/078107
- US-B1- 6 291 005

## Description

The present invention relates to a liquid bread improver. More specifically, the present invention relates to a liquid bread improver which is suitable for preparing bakery foods. According to a further aspect, the present invention relates to a method for providing a liquid bread improver suitable for preparing bakery foods.

Bread improvers are common ingredients in bakery products such as bread and are used to enhance the product quality and to improve or facilitate the production process. Usually bread improvers contain enzymes and emulsifiers and may have different physical forms like powders, blocks or liquids.

Liquid bread improvers are advantageous since they can be dosed automatically, which is useful in for example industrial scale bakeries. Conventionally, liquid bread improvers are based on oil components. However, the oil used in current liquid bread improvers makes the product expensive and this will be more expensive in the future. Additionally, oil production has a negative environmental impact. Further, the physical structure of an oil-based bread improver is made of a network of fat crystals which makes it vulnerable to break at high temperatures. The use of oil for bread improvers has also a drawback in view of the production process since it requires substantial energy for heating up the oil and subsequent cooling for forming the fat crystal network.

Given the above drawbacks of oil-based bread improvers, there have been studies in the past for liquid bread improvers in which no fat component is present. However, a good working liquid bread improver that could replace oil based bread improvers has not yet been identified. This is, amongst others, due to the following reasons.

First of all, the baking performances of some conventional non oil-based liquid bread improvers in terms of for example baking time are not sufficient for industrial scale bakery.

Secondly, the shelf life of liquid bread improvers in which no fat is present is generally poor. These bread improvers could only be stored for a couple of days, which is a drawback in bakery applications since sometimes only small amounts of bread improver are used in the bakery. An important aspect of shelf life is that the enzymes present in the bread improvers remain active. Further, the physical stability of the liquid bread improver is important. For that reason emulsifiers are regularly used, which is a disadvantage since food products without E-numbers are preferred (eg. E-numbers E400-E499), to provide so called 'clean label' ingredients.

Thirdly, the handling of bread improvers is important. For example, bread improvers are regularly used in automated controlled bakery processes, wherein the bread improver needs to be of a viscosity that allows the bread improver to be pumped and mixed efficiently.

Considering the above disadvantages, there is a need in the art for a liquid bread improver which can be used as conventional oil based bread improvers, however which liquid bread improver is not oil-based.

Therefore, it is an object of the present invention, amongst other objects, to provide a liquid bread improver suitable for preparing bakery foods, such as bread and soft rolls.

More specifically, the present invention relates according to a first aspect to a liquid bread improver suitable for preparing bakery foods as defined in the appended claims.

'Liquid bread improver' as used in the present context encompasses bread improvers having a viscosity which allows the liquid bread improver to be processed by a pump or other dosing equipment.

A 'bread improvement agent' as used in the present context means an agent, or group of agents, which may provide taste, colour and aroma's to the bread to be baked. The composition of the bread improve agent may be adapted to the type of bread to be baked, since each type of bread has its own characteristics. Preferably the present bread improvement agent is a powder, i.e. a bread improvement powder. Optionally the bread improvement agent may be in be in liquid form.

'wt. %' as used in the present context means weight percentage of the indicated component as the total weight of the liquid bread improver, unless otherwise indicated.

The present invention provides a liquid bread improver which has substantially no oil components. Further, the present inventors surprisingly found that the present liquid bread improver is suitable for preparing bakery foods of a quality as good or even better as with oil-based liquid bread improvers. Further, the baking performance of the present liquid bread improver is excellent in terms of handling and labour required. The present liquid bread improver has a viscosity which is less than the viscosity of oil based liquid bread improvers, which permits an easier processing such as pumping.

Another advantage of the present liquid bread improver is that it is stable over longer periods of time. Specifically, liquid bread improvers according to the present invention remain physical stable for periods of more than 12 months without phase separation, while the enzymes present remain their activity. This is of utmost importance for the liquid bread improver in order it can be used for preparing bakery foods. In addition it was found that the medium of the liquid bread improver could also stabilise micro-organisms (yeast, lactic acid and other sour dough bacteria) during this shelf life. Thus the liquid medium is suitable as an active starter for sour doughs. Accordingly, the present invention provides an E number free clean label bread improver.

Preferably the present liquid bread improver has a water activity of lower than 0.9, such as lower than 0.85 or lower than 0.8. More preferably the water activity is in the range of 0.7 to 0.85, more preferably in the range of 0.75 to 0.77. An advantage of the present water activity is that the liquid bread improver is microbial stable for longer periods of time, such as more than 12 months).

According to a preferred embodiment, the present liquid bread improver comprises:
(i) 15 to 35 wt. % sugar;
(ii) 15 to 25 wt. % proteins or protein containing flours;
(iii) 10 to 20 wt. % salt;
(iv) 1 to 5 wt. % enzymes;
(v) 1 to 10 wt. % bread improvement agent; and/or
(vi) water up to 100 wt %.
Liquid bread improvers according to the above recipe can conveniently be used for baking of several kinds of bread such as white bread, brown bread, soft rolls, etc, wherein the handling of the present bread improver is excellent and the liquid bread improver can be stored for at least several months as being both physicochemical stabile and the enzymes remains active. The present liquid bread improver can be adjusted for specific types of bread by adjusting the bread improvement agent. Further, the present liquid bread improver enables a high uptake of powder, such as sugar, protein, various flour types, enzymes, micro-organisms, bread improvement agent, while the liquid bread improver remains a homogenous liquid, having a viscosity which allows the liquid bread improver to be pumped and dosed automatically. Preferably, the content of the present powder is more (in weight percentages) than the water. Preferably, the present liquid bread improver does not comprise hydrocolloids.

According to yet another preferred embodiment, the present sugar is dextrose. Preferably, the sugar or dextrose is present in 15 to 30 wt %, or 20 to 25 wt. % of the liquid bread improver. An advantage of liquid bread improvers having dextrose is that no further thickeners of stabilizers are added, while dextrose is a common ingredient in bakery foods.

The present proteins are proteins derived from milk, soy, peas and beans. However, more preferably the present proteins are gluten and/or the proteins or gluten is present in 15 to 25 wt. % of the liquid bread improver. An advantage of using gluten as proteins is that gluten conveniently can be used in a liquid bread improver since gluten is also present in dough. Further, by using gluten, the present liquid bread improver does not comprise emulsifiers which are not necessary ingredients for the bakery food. Surprisingly, the inventors found that present liquid bread improver comprising gluten remains at a viscosity which allows the bread improver to be pumped. Thus, although gluten together with water is used, in this medium with water the gluten did not form a rubber like pasty texture. Therefore, gluten provides a physicochemical product having a shelf life of at least 4 to 6 months.

Preferably, the present liquid bread improver does not comprise food grade emulsifiers such as lecithin, monoglycerides, or other food emulsifiers such as calcium-sodium stearoyl lactylate (CSL) or diacetyl tartaric acid ester of mono-and diglycerides (DATEM). Further, in a preferred embodiment, the present liquid bread improver does not comprise glycerol, acid or sugar syrup, ingredients which are normally added to non oil liquid bread improvers as a processing aid to reduce the water activity. However, if the absence of E-numbers is not required, they can be used.

According to a preferred embodiment, the present salt is a sodium salt, potassium salt, ammonium salt or combinations thereof. More preferably the present salt is sodium chloride, potassium chloride, ammonium chloride or combinations thereof. The addition of salt to the present liquid bread improver is advantageous since it may adjust the water activity to a desired level in order to minimize microbial growth. Further, salt is a common ingredient in bread, making it an appropriate ingredient for the liquid bread improver.

According to yet another preferred embodiment, the present enzymes are enzymes suitable for use in a bread improver. More preferably, the enzymes are chosen from the group consisting of amylase, glucose oxidases, lipase, protease, hemicellulase and combinations thereof. Preferably, the present enzymes are dissolved in the present liquid bread improver.

According to a preferred embodiment, the present bread improvement agent is a bread improvement agent suitable for the preparation of white bread, wholemeal bread or other bakery products. More preferably, the present bread improvement agent comprises dairy products, soy flour, malt extracts, malt flour, yeast. Further, the bread improvement agent may also comprise lecithin, starch, bean flour, locust bean gum, carboxymethylcellulose, gelatine guar gum, xanthan gum or combinations thereof.

Given the advantageous properties of the present liquid bread improver, the present invention relates according to another aspect to a method for providing a liquid bread improver suitable for preparing bakery foods, comprising the steps of:
(i) dissolving a salt in water to provide salted water;
(ii) adding to the salted water while mixing a sugar, a protein, enzymes and a bread improvement agent until a homogeneous mixture is obtained;
thereby providing a liquid bread improver having a water activity of lower than 0.9 and/or wherein the salt is present in 5 to 20 wt.% of the liquid bread improver wherein the proteins are derived from milk, soy, peas, or beans or the proteins are gluten and wherein the proteins or gluten are present in an amount of 15 to 25 wt.% of the liquid bread improver. The present method is advantageous since the ingredients of the liquid bread improver can simply be mixed until a homogenous mixture is obtained, without necessary heating and cooling steps. Thus, the present method is effective both in production costs as in the use of natural resources. Generally, mixing for a time period of at least 5 minutes would be sufficient to provide a homogenous mixture. Preferably, dissolving salt in water comprises adding salt to the water until the saturation point is reached, so the maximum amount of salt is added without precipitation of salt.

Preferably, the present method provides the liquid bread improver suitable for preparing bakery foods according to the present invention.

In a preferred embodiment the present sugar, proteins, salt, enzymes and/or bread improvement agent added to water are in powder form. However these components can be used dissolved or dispersed in water as long as the water activity stays below 0.9.

Disclosed is a method for providing a bakery food product, wherein the liquid bread improver according to the present invention is used. Preferably, the present liquid bread improver is mixed with flour and other required components to a dough, proofed and subsequently the provided mixture is baked thereby providing the bakery food product. Preferably the bakery food product is a tin bread such as white bread or wholemeal bread or the present bakery food product is a soft roll such as white or brown soft rolls or crispy rolls.

Disclosed is a bakery food product such as bread obtainable by the present method. The bakery food product provided by the present method has advantageous properties such as a fine texture and slow aging of the crumb.

The principles of the present invention will be further detailed in the example showing preferred embodiments of the present invention.

### Example 1

Preparation of 5 liter liquid bread improver for baking wholemeal bread.

### Ingredients

| **Ingredients** | **Wt.%** |
|---|---|
| Water | 40 |
| Dextrose | 22 |
| Gluten | 20 |
| NaCl | 13 |
| Amylase & hemicellulases (powder) | 2 |
| Bread improvement powder (combination of whey powder, malt, colourings, aroma, flour) | 3 |

### Process

The NaCl was added to the water under stirring. Subsequently, the gluten and dextrose were added to the salted water under stirring, followed by adding enzymes and bread improvement powder under stirring. Finally the obtained mixture was stirred for five minutes to obtain a homogenous mixture, wherein the gluten did not form a rubber like texture.

### Storage

The homogenous liquid bread improver was stored for 4 months in a plastic drum at room temperature. After 4 months the stored liquid bread improver was analyzed on its physical condition and on the activity of the enzymes. The liquid bread improver had the same physical condition after 6 months as after preparation, without being a rubber like texture or without separation of the various phases. Further, the enzyme activity was substantially the same as after preparation. Accordingly, the liquid bread improver was both physical stable as enzymatic stable.

### Test for baking wholemeal tin bread.

The liquid bread improver stored for 6 months was used for baking wholemeal bread. The liquid bread improver was mixed with dough for 8 min (first 3 min slow, then 5 min fast) followed by rounding the dough. After a first proofing of 30 min. at 32 °C the dough was moulded and proofed for 70 min at 32 °C. Subsequently the moulded and proofed dough was baked at 235 °C for 40 min, followed by cooling and slicing.

### Results

The sliced bread was analyzed on texture, volume, appearance and taste, which were not different from bread baked with conventional liquid bread improvers or improvers on a powder base. Thus, the liquid bread improver allowed the above baking process to provide a wholemeal bread of good quality.

### Test for baking white buns

A bread improver was prepared according to the recipe above, however no malt was present in the bread improvement powder. White buns were prepared by mixing dough with bread improver for 8 min (first 3 min slow, then 5 min fast) followed by a first proofing of 10 min. at 32 °C. Subsequently, the mixture was divided, rounded and proofed for another 70 min. at 32 °C. Finally, the proofed dough was baked for 9 min. at 260 °C.

The white buns prepared were analyzed on texture, volume, appearance and taste, which were not different from buns baked with conventional liquid bread improvers or improvers on a powder base. The crumb structure was even finer, compared with buns made with conventional improvers. Thus, the liquid bread improver allowed the above baking process to provide white buns of good quality.

### Example 2

Preparation of 5 liter liquid bread improver for baking French baguettes.

### Ingredients

| **Ingredients** | **Wt.%** |
|---|---|
| Water | 56 |
| Dextrose | 0 |
| Gluten | 23 |
| NaCl | 19 |
| Ascorbic acid, amylase, glucose oxidase, lipase & hemicellulases (powder) | 2 |

### Process

The NaCl was added to the water under stirring. Subsequently, the gluten and dextrose were added to the salted water under stirring, followed by adding enzymes and bread improvement powder under stirring. Finally the obtained mixture was stirred for five minutes to obtain a homogenous mixture, wherein the gluten did not form a rubber like texture.

### Storage

The homogenous liquid bread improver was stored for 3 weeks in a plastic drum at room temperature. After 3 weeks the stored liquid bread improver was analyzed on its physical condition and on the activity of the enzymes. The liquid bread improver had the same physical condition after 3 weeks as after preparation, without being a rubber like texture or without separation of the various phases. Further, the enzyme activity was substantially the same as after preparation. Accordingly, the liquid bread improver was both physically stable as enzymatically stable.

### Test for baking French baguettes.

The liquid bread improver stored for 3 weeks was used for baking French baguettes. The liquid bread improver was mixed with dough for 8 min (first 3 min slow, then 5 min fast) followed by rounding the dough. After a first proofing of 60 min. at 32 °C the dough was moulded into sticks and proofed for 30 min at 32 °C. Subsequently the moulded and proofed dough was baked at 235 °C for 20 min, followed by cooling. Alternatively the dough was mixed as before. After a first proofing of 60 min. at 32 °C the dough was moulded into sticks and cooled to -1 °C for 1-2 days. Before baking the baguettes were left for 40 min at room temp and proofed for 50 min at 32 °C. Subsequently the proofed dough was baked at 235 °C for 20 min, followed by cooling.

### Results

The French baguettes were analyzed on texture, volume, appearance and taste, which were not different from bread baked with conventional improvers on a powder base for French baguettes. Thus, the liquid bread improver allowed the above baking process to provide a French baguette of good quality with similar crust properties and crust opening as the regular improver.

### Example 3

Preparation of 5 liter liquid bread improver for baking hamburger buns.

### Ingredients

| **Ingredients** | **Wt.%** |
|---|---|
| Water | 41 |
| Dextrose | 20 |
| Gluten | 20 |
| NaCl | 14 |
| Ascorbic acid, amylase, glucose oxidase, lipase & hemicellulases (powder) | 5 |

### Process

The NaCl was added to the water under stirring. Subsequently, the gluten and dextrose were added to the salted water under stirring, followed by adding enzymes and bread improvement powder under stirring. Finally the obtained mixture was stirred for five minutes to obtain a homogenous mixture, wherein the gluten did not form a rubber like texture.

### Storage

The homogenous liquid bread improver was stored for 3 weeks in a plastic drum at room temperature. After 3 weeks the stored liquid bread improver was analyzed on its physical condition and on the activity of the enzymes. The liquid bread improver had the same physical condition after 3 weeks as after preparation, without being a rubber like texture or without separation of the various phases. Further, the enzyme activity was substantially the same as after preparation. Accordingly, the liquid bread improver was both physical stable as enzymatic stable.

### Test for baking hamburger buns.

The liquid bread improver stored for 3 weeks was used for baking hamburger buns. First a sponge was made of part of the flour, water and yeast and left fermenting for 4 h at 32 °C. The liquid bread improver was mixed with the sponge and remainder of flour, yeast and dextrose to form a dough for 8 min (first 3 min slow, then 5 min fast) followed by rounding the dough. After a first proofing of 5 min. at 32 °C the dough was moulded into buns and proofed for 48 min at 38 °C. Subsequently the proofed dough was baked at 230 °C for 11 min, cooled and cut, followed by freezing at -18 °C. for 1-2 days.

### Results

The buns were analyzed on texture, volume, cupping, wrinkling, appearance and taste, which were not different from bread baked with conventional liquid or powder improvers for hamburger buns. Thus, the liquid bread improver allowed the above baking process to provide hamburger buns of good quality with similar and even crust properties and equal appearance as the regular improver. The crumb structure was even finer compared with the conventional improvers.

### Comparative example

Preparation of 5 liter liquid bread improver without gluten for baking white bread.

### Ingredients

| **Ingredients** | **Wt.%** |
|---|---|
| Water | 55 |
| Dextrose | 25 |
| Gluten | 0 |
| NaCl | 18 |
| Ascorbic acid, lipase amylase & hemicellulases (powder) | 2 |

### Process

The NaCl was added to the water under stirring. Subsequently, the dextrose was added to the salted water under stirring, followed by adding enzymes and bread improvement powder under stirring. Finally the obtained mixture was stirred for five minutes to obtain a homogenous mixture.

### Storage

The homogenous liquid bread improver was stored in a plastic drum at room temperature. After one week the stored liquid bread improver was analyzed on its physical condition and on the activity of the enzymes. The liquid bread improver had separated in two phases. Thus, the liquid bread improver without gluten was not physically stable.

### Test for baking white tin bread.

The liquid bread improver stored for one week was used for baking white tin bread. The liquid bread improver was homogenised and was mixed with dough for 8 min (first 3 min slow, then 5 min fast) followed by rounding the dough. After a first proofing of 30 min. at 32 °C the dough was moulded and proofed for 70 min at 32 °C. Subsequently the moulded and proofed dough was baked at 235 °C for 35 min, followed by cooling and slicing.

### Results

The sliced bread was analyzed on texture, volume, appearance and taste, which were very different from bread baked with the liquid bread improver of Example 1, conventional liquid bread improvers or improvers on a powder base. The liquid bread improver of Example 2 had 19% less volume and a poor appearance. Softness of the crumb after 1 and 2 days storage was deteriorated as well: de hardness of the crumb was 98 and 111% higher, respectively.

## Claims

1. Liquid bread improver suitable for preparing bakery foods comprising, proteins, salt, enzymes, a bread improvement agent and water, wherein the salt is present in 5 to 20 wt.% of the liquid bread improver, wherein the liquid bread improver has a water activity of lower than 0.9, wherein the proteins are derived from milk, soy, peas, or beans or the proteins are gluten and wherein the proteins or gluten are present in an amount of 15 to 25 wt.% of the liquid bread improver.

2. Liquid bread improver according to claim 1, further comprising sugar.

3. Liquid bread improver according to claim 1 or claim 2, comprising:
(i) 15 to 35 wt. % sugar;
(ii) 15 to 25 wt. % proteins;
(iii) 10 to 20 wt. % salt;
(iv) 1 to 5 wt % enzymes;
(v) 1 to 10 wt. % bread improvement agent; and
(vi) water up to 100 wt. %.

4. Liquid bread improver according to claim 2 or claim 3, wherein the sugar is dextrose, wherein the dextrose is present in 20 to 25 wt. % of the liquid bread improver.

5. Liquid bread improver according to any of the claims 1 to 4, wherein the salt is a sodium salt, potassium salt, ammonium salt or combinations thereof.

6. Liquid bread improver according to any of the claims 1 to 5, wherein the enzymes are chosen from the group consisting of amylase, glucose oxidases, lipase, protease, hemicellulase and combinations thereof.

7. Liquid bread improver according to any of the claims 1 to 6, wherein the bread improvement agent comprises dairy products, wheat flour, soy flour, malt extracts, malt flour, yeast, lactobacilli, starch, bean flour, locust bean gum, carboxymethylcellulose, gelatin, guar gum, xanthan gum or combinations thereof.

8. Method for providing a liquid bread improver according to any one of the claims 2 to 7 suitable for preparing bakery foods, comprising the steps of:
(i) dissolving a salt in water to provide salted water;
(ii) adding to the salted water while mixing a sugar, a protein, enzymes and a bread improvement agent until a homogeneous mixture is obtained;
thereby providing a liquid bread improver having a water activity of lower than 0.9, wherein the salt is present in 5 to 20 wt.% of the liquid bread improver wherein the liquid bread improver has a water activity of lower than 0.9 and wherein the proteins are derived from milk, soy, peas, or beans or the proteins are gluten and wherein the proteins or gluten are present in an amount of 15 to 25 wt.% of the liquid bread improver.

9. Method for providing a bakery food product, wherein the liquid bread improver according to any of the claims 1 to 7 is used.

10. Method according to claim 9, wherein the liquid bread improver according to any of the claims 1 to 7 is mixed with dough and subsequently the provided mixture is baked thereby providing the bakery food product.

## Patentansprüche

1. Flüssiges Backmittel für Brot, das zum Herstellen von Bäckerei-Nahrungsmitteln bzw. Backwaren, welche Proteine, Salz, Enzyme, ein Mehlbehandlungsmittel und Wasser umfassen, wobei das Salz in einer Menge von 5 bis 20 Gew.-% des flüssigen Backmittels für Brot vorhanden ist, wobei das flüssige Backmittel für Brot eine Wasseraktivität von weniger als 0,9 aufweist, wobei die Proteine aus Milch, Soja, Erbsen oder Bohnen gewonnen wurden oder die Proteine Gluten sind und wobei die Proteine oder das Gluten in einer Menge von 15 bis 25 Gew.-% des flüssiges Backmittels für Brot vorhanden sind.

2. Flüssiges Backmittel für Brot nach Anspruch 1, welches des Weiteren Zucker umfasst.

3. Flüssiges Backmittel für Brot nach Anspruch 1 oder Anspruch 2, umfassend:
(i) 15 bis 35 Gew.-% Zucker,
(ii) 10 bis 30 Gew.-% Proteine,
(iii) 10 bis 20 Gew.-% Salz;
(iv) 1 bis 5 Gew.-% Enzyme,
(v) 1 bis 10 Gew.-% Mehlbehandlungsmittel und
(vi) Wasser bis auf 100 Gew.-%.

4. Flüssiges Backmittel für Brot nach Anspruch 2 oder Anspruch 3, wobei der Zucker Dextrose ist, wobei die Dextrose in einer Menge von 20 bis 25 Gew.-% des flüssigen Backmittels für Brot vorhanden ist.

5. Flüssiges Backmittel für Brot nach einem der Ansprüche 1 bis 4, wobei das Salz ein Natriumsalz, Kaliumsalz, Ammoniumsalz oder Kombinationen davon ist.

6. Flüssiges Backmittel für Brot nach einem der Ansprüche 1 bis 5, wobei die Enzyme ausgewählt sind aus der Gruppe bestehend aus Amylase, Glucoseoxidasen, Lipase, Protease, Hemicellulase und Kombinationen davon.

7. Flüssiges Backmittel für Brot nach einem der Ansprüche 1 bis 6, wobei das Mehlbehandlungsmittel Molkereiprodukte, Weizenmehl, Sojamehl, Malzextrakte, Malzmehl, Hefe, Lactobacilli, Stärke, Bohnenmehl, Johannisbrotgummi, Carboxymethylcellulose, Gelatine, Guar Gum, Xanthangummi oder Kombinationen davon umfasst.

8. Verfahren zum Bereitstellen eines flüssigen Backmittels für Brot gemäß einem der Ansprüche 2 bis 7, welches zum Herstellen von Bäckerei-Nahrungsmitteln geeignet ist, welches die Schritte umfasst:
(i) Lösen eines Salzes in Wasser, um salzhaltiges Wasser herzustellen,
(ii) Hinzugeben eines Zuckers, eines Proteins, von Enzymen und einem Mehlbehandlungsmittel zu dem salzhaltigen Wasser unter Mischen, bis eine homogene Mischung erhalten wird;
wodurch ein flüssiges Backmittel für Brot mit einer Wasseraktivität von unter 0,9 bereitgestellt wird, wobei das Salz in einer Menge von 5 bis 20 Gew.-% des flüssigen Backmittels für Brot vorhanden ist, wobei das flüssige Backmittel für Brot eine Wasseraktivität von weniger als 0,9 aufweist und wobei die Proteine aus Milch, Soja, Erbsen oder Bohnen gewonnen wurden oder die Proteine Gluten sind und wobei die Proteine oder Gluten in einer Menge von 15 bis 25 Gew.-% des flüssiges Backmittels für Brot vorhanden sind.

9. Verfahren zum Bereitstellen eines Bäckerei-Nahrungsmittelerzeugnisses bzw. einer Backware, wobei das flüssige Backmittel für Brot nach einem der Ansprüche 1 bis 7 verwendet wird.

10. Verfahren nach Anspruch 9, wobei das flüssige Backmittel für Brot nach einem der Ansprüche 1 bis 8 mit Teig gemischt wird und die bereitgestellte Mischung nachfolgend gebacken wird, wodurch das Bäckerei-Nahrungsmittelerzeugnis bereitgestellt wird.

## Revendications

1. Améliorant liquide pour boulangerie adapté pour préparer des produits de boulangerie comprenant, des protéines, un sel, des enzymes, un agent d'amélioration pour boulangerie et de l'eau, dans lequel le sel est présent dans une quantité de 5 à 20 % en poids de l'améliorant liquide pour boulangerie, dans lequel l'améliorant liquide pour boulangerie présente une activité de l'eau inférieure à 0,9, dans lequel les protéines sont dérivées du lait, du soja, de pois, ou de fèves ou les protéines sont du gluten et dans lequel les protéines ou le gluten sont présents dans une quantité de 15 à 25 % en poids de l'améliorant liquide pour boulangerie.

2. Améliorant liquide pour boulangerie selon la revendication 1, comprenant en outre un sucre.

3. Améliorant liquide pour boulangerie selon la revendication 1 ou la revendication 2, comprenant :
(i) 15 à 35 % en poids d'un sucre ;
(ii) 15 à 25 % en poids de protéines ;
(iii) 10 à 20 % en poids d'un sel ;
(iv) 1 à 5 % en poids d'enzymes ;
(v) 1 à 10 % en poids d'agent d'amélioration pour boulangerie ; et
(vi) de l'eau jusqu'à 100 % en poids.

4. Améliorant liquide pour boulangerie selon la revendication 2 ou la revendication 3, dans lequel le sucre est le dextrose, dans lequel le dextrose est présent dans une quantité de 20 à 25 % en poids de l'améliorant liquide pour boulangerie.

5. Améliorant liquide pour boulangerie selon l'une quelconque des revendications 1 à 4, dans lequel le sel est un sel de sodium, un sel de potassium, un sel d'ammonium ou des combinaisons de ceux-ci.

6. Améliorant liquide pour boulangerie selon l'une quelconque des revendications 1 à 5, dans lequel les enzymes sont choisies dans le groupe constitué d'une amylase, des glucose oxydases, d'une lipase, d'une protéase, d'une hémicellulase et des combinaisons de celles-ci.

7. Améliorant liquide pour boulangerie selon l'une quelconque des revendications 1 à 6, dans lequel l'agent d'amélioration pour boulangerie comprend des produits laitiers, une farine de blé, une farine de soja, des extraits de malt, une farine de malt, une levure, des lactobacilles, un amidon, une farine de fèves, une gomme de caroube, une carboxyméthylcellulose, une gélatine, une gomme de guar, une gomme de xanthane ou des combinaisons de ceux-ci.

8. Procédé pour fournir un améliorant liquide pour boulangerie selon l'une quelconque des revendications 2 à 7 adapté pour préparer des produits de boulangerie, comprenant les étapes consistant à :
(i) dissoudre un sel dans de l'eau pour fournir une eau salée ;
(ii) tout en mélangeant, ajouter à l'eau salée un sucre, une protéine, des enzymes et un agent d'amélioration pour boulangerie jusqu'à ce qu'un mélange homogène soit obtenu ;
pour ainsi fournir un améliorant liquide pour boulangerie ayant une activité de l'eau inférieure à 0,9, dans lequel le sel est présent dans une quantité de 5 à 20 % en poids de l'améliorant liquide pour boulangerie dans lequel l'améliorant liquide pour boulangerie présente une activité de l'eau inférieure à 0,9 et dans lequel les protéines sont dérivées du lait, du soja, de pois, ou de fèves ou les protéines sont du gluten et dans lequel les protéines ou le gluten sont présents dans une quantité de 15 à 25 % en poids de l'améliorant liquide pour boulangerie.

9. Procédé pour fournir un produit de boulangerie, dans lequel un améliorant liquide pour boulangerie selon l'une quelconque des revendications 1 à 7 est utilisé.

10. Procédé selon la revendication 9, dans lequel l'améliorant liquide pour boulangerie selon l'une quelconque des revendications 1 à 7 est mélangé avec de la pâte et, ensuite, le mélange fourni est cuit, pour ainsi fournir le produit de boulangerie.
